# EUROPÄISCHE PATENTSCHRIFT

(11) **EP 2 678 373 B1**
(45) Veröffentlichungstag und Bekanntmachung des Hinweises auf die Patenterteilung: **05.11.2014**
(21) Anmeldenummer: 12702028.7
(22) Anmeldetag: 31.01.2012
(51) Int. Cl.: C08G 65/00

(54) **POLYMERE BASIEREND AUF GLYCERINCARBONAT UND EINEM AMIN**
POLYMERS ON THE BASIS OF GLYCERIN CARBONATE AND AN AMINE
POLYMÈRES À BASE DE CARBONATE DE GLYCÉRINE ET D'UNE AMINE

(30) Priorität: 22.02.2011 EP 11155406
(43) Veröffentlichungstag der Anmeldung: 01.01.2014
(73) Patentinhaber: BASF SE, 67056 Ludwigshafen (DE)
(72) Erfinder: RAETHER, Roman Benedikt, 67346 Speyer (DE); BRAND, Fabien Jean, F-68330 Huningue (FR)
(86) Internationale Anmeldenummer: PCT/EP2012/051607
(87) Internationale Veröffentlichungsnummer: WO 2012/113617

(56) Entgegenhaltungen:
- WO-A1-2008/142374
- WO-A1-2011/072829
- JP-A- 7 316 503
- JP-A- 11 335 313
- JP-A- 2009 155 407
- DANIEL WILMS ET AL: "Hyperbranched PEG by Random Copolymerization of Ethylene Oxide and Glycidol", MACROMOLECULAR: RAPID COMMUNICATIONS, WILEY VCH VERLAG, WEINHEIM, DE, Bd. 31, Nr. 20, 18. Oktober 2010 (2010-10-18), Seiten 1811-1815, XP002621645, ISSN: 1022-1336, DOI: 10.1002/MARC.201000329 [gefunden am 2010-08-05]
- KIHARA NOBUHIRO ET AL: "Synthesis and properties of poly(hydroxyurethanes)", JOURNAL OF POLYMER SCIENCE. PART A, POLYMER CHEMISTRY, JOHN WILEY & SONS, INC, US, Bd. 31, Nr. 11, 1. Januar 1993 (1993-01-01), Seiten 2765-2773, XP002599514, ISSN: 0887-624X

## Beschreibung

Die vorliegende Erfindung betrifft ein Polymer und das zugehörige Polymerisationsverfahren sowie die Verwendung der erfindungsgemäßen Polymere beispielsweise als Emulgator, als Schaumregulierer, als Schaumverstärker, als Schaumdämpfer, zur Dispersion von Feststoffen, als Netzmittel für harte Oberflächen oder als Tensid für Wasch- oder Reinigungszwecke. Die erfindungsgemäßen Polymere basieren auf Glycerincarbonat und einem Amin. Als Comonomer wird mindestens ein Alkylenoxid wie Ethylenoxid oder Propylenoxid oder ein cyclisches Carbonat der nachfolgend definierten Formel (I), wie Ethylencarbonat oder Propylencarbonat, eingesetzt.

Glycerincarbonat stellt eine Grundchemikalie mit einem breiten Anwendungsgebiet dar. So kann es beispielsweise mit Anhydriden unter Ausbildung von Esterbindungen oder mit Isocyanaten unter Ausbildung von Urethanbindungen reagieren. Weiterhin findet Glycerincarbonat Verwendung als Lösungsmittel in Kosmetika oder in der Medizin. Glycerincarbonat eignet sich aufgrund seiner niedrigen Toxizität, seiner niedrigen Verdampfungsrate, seiner niedrigen Flammbarkeit und seiner feuchtigkeitsspendenden Eigenschaften als Benetzungsmittel von kosmetischen Materialien oder als Trägerlösungsmittel für medizinisch wirksame Substanzen. Weiterhin kann Glycerincarbonat auch als Edukt in der Polymerherstellung verwendet werden. Alternativ zu Glycerincarbonat kann bei der Polymerherstellung auch Epichlorhydrin, Glycidol oder Glycerin eingesetzt werden, wobei in Abhängigkeit von diesen als Edukt eingesetzten Glycerin-Derivaten die dadurch hergestellten Oligomeren- oder Polymeren-Strukturen variiert werden können.

US-A 5,041,688 betrifft ein Verfahren zur Herstellung von Polyglycerinen, die einen niedrigen Anteil an cyclischen Produkten aufweisen, wobei Glycerin mit Epichlorhydrin in Gegenwart einer Säure wie Phosphorsäure zur Reaktion gebracht wird und eine nachfolgende Veresterung mit längerkettigen Carbonsäuren ausgeführt wird.

Probleme beim vorstehend beschriebenen Polymerisationsverfahren sind aber der niedrige Kondensationsgrad, die breite Molekulargewichtsverteilung und die schwarze, teerartige Konsistenz des Produktes, welche durch hohe thermische Belastungen bei der Kondensation des Glycerins verursacht wird.

Diese Probleme konnten zumindest teilweise durch die Verwendung von Glycidol gemäß DE-A 199 47 631 und EP-A 1785410 anstelle von Glycerin bzw. Epichlorhydrin überwunden werden. Andererseits ist die Verwendung von Glycidol aufgrund dessen karzinogene Eigenschaften und dessen hoher Labilität mit zusätzlichen Problemen verbunden.

DE-A 199 47 631 betrifft ein Verfahren zur Herstellung von Polyolen auf Glycidolbasis mit einem Polymerisationsgrad von 1 bis 300, einer Polydispersität < 1,7 und einem Gehalt an verzweigten Einheiten von bis zu ca. 30 % (bestimmt durch ¹³C-NMR-Spektroskopie). In dem zugehörigen Verfahren wird eine Lösung, enthaltend Glycidol in verdünnter Form, mit einer wasserstoffaktiven Starterverbindung unter basischer Katalyse umgesetzt. Ein weiteres Verfahren zur Herstellung von Polymeren auf Glycidolbasis ist in US-A 4,298,764 beschrieben, wodurch langkettige n-Alkylglyceryletheralkohole mit einer n-Alkylkettenlänge von 10 bis 20 hergestellt werden können.

EP-A 1 785 410 betrifft unverzweigte Polyglycerinmonoether, die durch basische Katalyse aus einem Alkohol mit bis zu 30 Kohlenstoffatomen und Glycidol hergestellt werden. Die dabei hergestellten Polyglycerinmonoether weisen mindestens zwei Fragmente auf, die auf Glycerin- bzw. Glycidol-Bausteinen basieren. Der Polyglycerinmonoether weist einen Monoetheranteil von mindestens 75 % und einen Dietheranteil von höchstens 5 % auf, wobei die jeweiligen Anteile über Umkehrphasen-Hochleistungsflüssigkeitschromatographie (RP-HPLC) bestimmt werden.

Als Alternative zum Edukt Glycidol ist zur Darstellung von Oligoglycerinen über eine basenkatalytische Polymerisation das leicht aus Glycerin zugängliche Glycerincarbonat (4-(Hydroxymethyl)-1,3-dioxolan-2-on) vorgeschlagen worden. So offenbart G. Rokicki et al., Green Chemistry, 2005, 7, Seiten 529 bis 539 ein Verfahren zur Herstellung von hyperverzweigten aliphatischen Polyethern, die erhältlich sind unter Verwendung von Glycerincarbonat als Monomeren. Die hyperverzweigten aliphatischen Polyether weisen zudem terminale Einheiten mit zwei primären Hydroxygruppen auf. Die Ring-Öffnungspolymerisation von Glycerincarbonat wird basenkatalytisch unter Verwendung von Alkoxiden durchgeführt.

Sinngemäße Verfahren zur Herstellung amphiphiler Glycerin- oder Polyglycerinmonoalkylether unter Verwendung von Glycerincarbonat als Edukt werden in JP-A 2000 1119 205 oder JP-A 11 335 313 beschrieben. Teilweise können auch langkettige Starteralkohole mit Alkylresten von bis zu 24 Kohlenstoffatomen eingesetzt werden.

WO 2010/012562 betrifft ein katalytisches Verfahren zur Polymerisierung von cyclischen Carbonaten, die aus erneuerbaren Quellen erhalten werden. Die Ringgröße der cyclischen Carbonate liegt zwischen 5 und 7 Atomen, wobei eine Ringöffnung-Polymerisation in Gegenwart eines Systems umfassend ein Metallsalz wie Triflat und einem Alkohol durchgeführt wird. Als cyclisches Carbonat kann auch Glycerincarbonat eingesetzt werden. Die dabei erhaltenen Polymere weisen Kohlensäureester-Bausteine auf, d.h. die Polymerisation erfolgt ohne CO₂-Abspaltung, da sie in Gegenwart des Metallsalzes durchgeführt wird, das als saurer Katalysator fungiert.

DE-A 44 33 959 betrifft ein schäumendes Detergenzgemisch mit einem verbesserten Schaumverhalten, das Alkyl- und Alkylenoligoglykosidglycerinether sowie anionische, nicht-ionische, kationische und/oder amphotere bzw. zwitterionische Tenside umfasst. Die in den Detergenzgemischen enthaltenen Alkyl- und/oder Alkenyloligoglykosidglycerinether werden hergestellt durch Veretherung von Alkyl- und/oder Alkenyloligoglykosiden mit Glyceringlycin, Glycerincarbonat oder direkt mit Glycerin und/oder technischen Oligoglyceringemischen. Sinngemäße Alkyl- und/oder Alkenyloligoglykosidglycerinether werden in DE-A 43 35 947 offenbart.

N. Kihara et al. (Journal of Polymer Science: Part A: Polymer Chemistry, Band 31 (1993); Seiten 2765-2773) offenbaren ein Herstellungsverfahren für Polyhydroxyurethane mit einem Molekulargewicht Mₙ von 20.000 bis 30.000, wobei über eine Polyaddition Verbindungen, die zwei cyclische Carbonatfragmente aufweisen, mit Diaminen wie Hexamethylendiamin bei 70 bis 100 °C über 24 h umgesetzt werden. Weiterhin wird beschrieben, dass cyclische Carbonate mit einer Ringgröße von 5 auf einfache Weise bei Raumtemperatur mit primären aliphatischen Aminen zu 2-Hydroxyethylurethanen umgesetzt werden können. Die entsprechenden Umsetzungen der cyclischen Carbonate mit Alkoholen oder Carbonsäuren sowie die Aminolyse der Ester finden unter diesen Reaktionsbedingungen jedoch nicht statt.

Die gleichzeitige Verwendung von Glycerincarbonat und einem Comonomeren, umfassend Alkylenoxid und/oder ein von Glycerincarbonat verschiedenes cyclisches Carbonat wie Ethylencarbonat, zur Herstellung von Polymeren ist noch nicht beschrieben worden.

Die der vorliegenden Erfindung zugrundeliegende Aufgabe besteht somit in der Bereitstellung von weiteren Polymeren basierend auf Glycerincarbonat sowie einem zugehörigen Polymerisationsverfahren. Gelöst wird die Aufgabe durch die erfindungsgemäßen Polymere hergestellt durch Polymerisation von
a) mindestens einem Alkylenoxid oder einem cyclischen Carbonat der Formel (I) 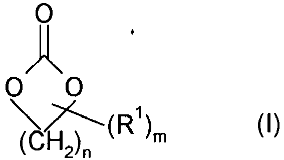 wobei
   n gleich 1 bis 10 ist,
   m gleich 0 bis 3 ist und
   R¹gleich C₁-C₁₀-Alkyl, C₂-C₁₀-Alkenyl, Aryl oder Aralkyl ist,
b) Glycerincarbonat und
c) mindestens einem Amin.

Die erfindungsgemäßen Polymere zeichnen sich dadurch aus, dass sie sowohl lineare als auch verzweigte Strukturen aufweisen können. In Abhängigkeit von den gewählten Polymerisationsbedingungen (z.B. Temperatur) und/oder der eingesetzten Monomeren (Edukten), können Polymere mit unterschiedlichen Strukturen - beispielsweise unterschiedliche Verzweigungsgrade - und folglich variablen Anwendungsprofilen hergestellt werden.

Aufgrund der Verwendung von Glycerincarbonat als Monomer verfügen die erfindungsgemäßen Polymere über eine erhöhte Anzahl an freien OH-Funktionen. Jedes eingebaute Glycerincarbonat-Monomer bewirkt eine zusätzliche potentielle Verknüpfungsstelle im Polymer, wodurch der Verzweigungsgrad gesteuert werden kann. Durch die freien OH-Funktionen werden eine Erhöhung der Wasserlöslichkeit, eine Verbesserung der Salzverträglichkeit (größere Salztoleranz) sowie höhere Trübungspunkte erzielt.

Ein weiterer Vorteil ist darin zu sehen, dass aufgrund der eingesetzten Edukte bzw. der Polymerisationsbedingungen Polymere hergestellt werden, die - bezogen auf das einpolymerisierte Amin (Starteramin) - keine hydrolyseanfälligen Esterbindungen aufweisen. Die erfindungsgemäßen Polymere weisen somit eine verbesserte pH-Stabilität gegenüber konventionellen Polymeren auf, in denen der Hydrophob- und der Hydrophilteil des amphiphilen Moleküles über eine Esterbindung miteinander verknüpft sind. Die erfindungsgemäßen Polymere sind vorzugsweise amphiphil.

Die Verwendung von Glycerincarbonat anstelle von Glycidol als Monomer bei der Polymerisierung ist zudem mit dem Vorteil verbunden, dass Glycerincarbonat eine leicht handhabbare und untoxische Verbindung darstellt, das leicht einpolymerisiert werden kann. Im Gegensatz dazu ist Glycidol (wie vorstehend bereits beschrieben) eine sehr gefährliche Substanz, die toxisch und teuer ist und für die außerdem in vielen Ländern eine amtliche Betriebsgenehmigung erforderlich ist. Weiterhin sind bei der Verwendung von Glycerincarbonat keine Schutzgruppen erforderlich. Zudem kann der Verzweigungsgrad der erfindungsgemäßen Polymere durch die Verwendung von Glycerincarbonat auf sehr einfache Weise gesteuert werden, wodurch eine Vielfalt von Polymeren mit unterschiedlichen Verwendungszwecken hergestellt werden können.

Im Rahmen der vorliegenden Erfindung bedeuten Definitionen wie C₁-C₁₀-Alkyl, wie beispielsweise vorstehend für den Rest R¹ in Formel (I) definiert, dass dieser Substituent (Rest) ein Alkylrest mit einer Kohlenstoffatomanzahl von 1 bis 10 ist. Der Alkylrest kann linear als auch verzweigt sowie gegebenenfalls zyklisch sein. Alkylreste, die sowohl einen zyklische als auch eine lineare Komponente aufweisen, fallen ebenfalls unter diese Definition. Gleiches gilt auch für andere Alkylreste, wie beispielsweise ein C₁-C₃-Alkylrest oder ein C₁-C₃₀-Alkylrest. Gegebenenfalls können die Alkylreste auch mit funktionellen Gruppen wie Amino, Amido, Ether, Vinylether, Isoprenyl, Hydroxy, Mercapto, Carboxyl, Halogen, Aryl oder Heteroaryl einfach oder mehrfach substituiert sein. Soweit nicht anders angegeben, weisen die Alkylreste vorzugsweise keine funktionellen Gruppen als Substituenten auf. Beispiele für Alkylreste sind Methyl, Ethyl, n-Propyl, sek-Propyl, n-Butyl, sek-Butyl, iso-Butyl, 2-Ethylhexyl, tertiär-Butyl (tert-Bu/t-Bu), Pentyl, Hexyl, Heptyl, Cyklohexyl, Octyl, Nonyl oder Decyl.

Im Rahmen der vorliegenden Erfindung bedeuten Definitionen wie C₂-C₁₀-Alkenyl, wie beispielsweise vorstehend für den Rest R¹ in Formel (I) definiert, dass dieser Substituent (Rest) ein Alkenylrest mit einer Kohlenstoffatomanzahl von 2 bis 10 ist. Dieser Kohlenstoffrest ist vorzugsweise einfach ungesättigt, gegebenenfalls kann er aber auch zwei- oder mehrfach ungesättigt sein. Hinsichtlich Linearität, Verzweigungen, zyklischer Anteile sowie gegebenenfalls vorhandenen Substitutenten gelten die sinngemäßen Angaben wie vorstehend anhand der C₁-C₁₀-Alkyl-Reste definiert. Vorzugsweise ist C₂-C₁₀-Alkenyl im Rahmen der vorliegenden Erfindung Vinyl, 1-Allyl, 3-Allyl, 2-Allyl, cis- oder trans-2-Butenyl, ω-Butenyl.

Im Rahmen der vorliegenden Erfindung bedeutet der Begriff "Aryl", wie beispielsweise vorstehend für den Rest R¹ in Formel (I) definiert, dass der Substituent (Rest) ein Aromat ist. Bei dem Aromat kann es sich um einen monozyklischen, bizyklischen oder gegebenenfalls polyzyklischen Aromaten handeln. Im Fall von polyzyklischen Aromaten können gegebenenfalls einzelne Zyklen ganz oder teilweise gesättigt sein. Bevorzugte Beispiele für Aryl sind Phenyl, Naphthyl oder Anthracyl, insbesondere Phenyl. Gegebenenfalls kann der Aryl-Rest auch mit funktionellen Gruppen einfach oder mehrfach substituiert sein, wie vorstehend für C₁-C₁₀-Alkyl definiert.

Im Rahmen der vorliegenden Erfindung bedeutet der Begriff Aralkyl, wie beispielsweise vorstehend für den Rest R¹ in Formel (I) definiert, dass ein Alkyl-Rest (Alkylen) wiederum mit einem Arylrest substituiert ist. Bei dem Alkylrest kann es sich beispielsweise um einen C₁-C₁₀-Alkylrest gemäß den vorstehenden Definitionen handeln.

In der vorstehenden Formel (I) kann der Rest R¹ einfach (m=1) oder mehrfach (m=2 oder 3) vorhanden sein. Der Rest R¹ kann dabei an beliebigen Kohlenstoffatomen des zyklischen Carbonats - entsprechend seiner Häufigkeit - ein oder mehrere Wasserstoffatome ersetzen. Sofern mehrere Reste R¹ vorhanden sind, könne diese am gleichen Kohlenstoffatom oder an verschiedenen Kohlenstoffatomen angebracht sein. Für m=0 ist das entsprechende zyklische Carbonat unsubstituiert.

Nachfolgend wird die vorliegende Erfindung weiter präzisiert.

Gegenstand der vorliegenden Erfindung ist zunächst ein Polymer hergestellt durch Polymerisation von
a) mindestens einem Alkylenoxid oder einem cyclischen Carbonat der Formel (I) 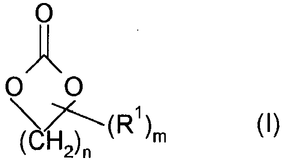 wobei
   n gleich 1 bis 10 ist,
   m gleich 0 bis 3 ist und
   R¹gleich C₁-C₁₀-Alkyl, C₂-C₁₀-Alkenyl, Aryl oder Aralkyl ist,
b) Glycerincarbonat und
c) mindestens einem Amin.

Die erfindungsgemäßen Polymere werden also hergestellt durch Polymerisation der vorstehend definierten Komponenten a) bis c). Polymerisationsverfahren als solche sind dem Fachmann bekannt, sie werden im nachfolgenden Text bezüglich des erfindungsgemäßen Polymerisationsverfahrens näher definiert.

Als Komponente a) wird mindestens ein Alkylenoxid oder ein cyclisches Carbonat der vorstehend definierten Formel (I) verwendet. Als Komponente a) können auch Gemische von 2 oder mehreren Alkylenoxiden und/oder cyclischen Carbonaten gemäß Formel (I) eingesetzt werden. Vorzugsweise enthält die Komponente a) ein Alkylenoxid oder ein cyclisches Carbonat gemäß Formel (I).

Alkylenoxide als solche sowie Verbindungen, die unter die Formel (I) fallen, sind dem Fachmann prinzipiell bekannt. Sofern vorhanden ist der Rest R¹ gemäß Formel (I) vorzugsweise unsubstituiert, insbesondere unsubstituiertes C₁-C₁₀-Alkyl. Besonders bevorzugt ist R¹ Methyl, Ethyl oder Propyl. Vorzugsweise ist m gleich 0 oder 1, insbesondere m gleich 0. Vorzugsweise ist n gleich 2 oder 3.

Vorzugsweise ist die Komponente a) ein Alkylenoxid, das ein Monomer umfasst, das ausgewählt ist aus Ethylenoxid, Propylenoxid, 1-Butenoxid, 2-Butenoxid, 1-Pentenoxid, Styroloxid, Epichlorhydrin, Glycidol, Epoxypropionsäure und deren Salze, Epoxypropionsäurealkylester, 1-Hexenoxid, 1-Heptenoxid, 1-Octenoxid, 1-Nonenoxid, 1-Decenoxid, 1-Undecenoxid oder 1-Dodecenoxid. Weiterhin ist es bevorzugt, dass die Komponente a) ein cyclisches Carbonat der Formel (I) ist, ausgewählt aus Ethylencarbonat oder Propylencarbonat. Beispiele für Epoxypropionsäurealkylester sind die entsprechenden Methyl-oder Ethylester sowie höhere Ester.

Besonders bevorzugt ist die Komponente a) mindestens ein Alkylenoxid, insbesondere Ethylenoxid und/oder Propylenoxid.

Als Komponente b) wird Glycerincarbonat verwendet. Glycerincarbonat sowie Verfahren zu dessen Herstellung sind dem Fachmann bekannt. Vorzugsweise wird Glycerincarbonat aus Glycerin hergestellt.

Als Komponente c) wird mindestens ein Amin verwendet.

Als Amine können alle dem Fachmann bekannten primären oder sekundären Amine sowie Ammoniak verwendet werden. Die primären oder sekundären Amine können unabhängig voneinander acyclisch, cyclisch, gesättigt oder ungesättigt, sowie aliphatisch, araliphatisch oder aromatisch sein. Beispielsweise enthält das Amin eine Aminogruppe (NH₂-Gruppe, bzw. NH₂-Funktion), gegebenenfalls können aber auch Amine mit zwei oder mehreren NH₂-Gruppen eingesetzt werden. Die Aminogruppen können wiederum einfach oder mehrfach substituiert sein, wobei die Substituenten gegebenenfalls weitere funktionelle Gruppen wie eine Hydroxygruppe (OH-Gruppe bzw. OH-Funktion) enthalten können.

Bevorzugte Amine sind Polyethylenimine (kommerziell erhältlich beispielsweise unter der Bezeichnung Lupasol^{®}, BASF SE, Ludwigshafen, Deutschland) mit Molekulargewichten von 500 bis 1.000.000 g/mol, lineare oder verzweigte Alkylamine, wie Monomethylamin, Monoethylamin, Mono-2-propylamin, Hexylamin, 2-Ethylhexylamin, 2-Propylheptylamin, Decylamin, Dodecylamin, Tridecylamin, Dimethylamin, Diethylamin, Dibutylamin, Dihexylamin, Di(2-ethylhexyl)amin oder Di(tridecyl)amin.

Weitere bevorzugte Amine sind ethergruppenhaltige Alkylamine, wie 3-Methoxypropylamin, 2-Ethoxyethylamin, 3-Ethoxypropylamin oder 3-(2-Ethylhexyloxy)propylamin, Polyetheramine wie die kommerziell erhältlichen Polyetheramine D230, D400 sowie D2000 (BASF SE) oder Polytetrahydrofuranamin 1700, Polyetheramin T403 und T5000 (BASF SE).

Weiterhin bevorzugte Amine sind Amine mit zyklischen gesättigten Substituenten oder Anilin und dessen Derivate, Ethylendiamin, 1,3-Dipropandiamin, 1,2-Propandiamin, Neopentandiamin, Hexamethylendiamin, Octamethylendiamin, Isophorondiamin, 4,4'-Diaminodicyclohexylmethan, 3,3'-Dimethyl-4,4'-Diaminodicyclohexylmethan, 4,4'-Diaminodiphenylmethan, 4,9-Dioxadodecan-1,12-diamin, 4,7,10-Trioxatridecan-1,13-diamin, 3-(Methylamino)propylamin, 3-(Cyclohexylamino)propylamin, 2-(Diethylamino)ethylamin, 3-(Dimethylamino)propylamin, 3-(Diethylamino)propylamin, Diethylentriamin, Dipropylentriamin, 3-(2-Aminoethyl)aminopropylamin ("N3-Amin"), N,N-Bis-(3-Aminopropyl)methylamin, N,N'-Bis(3-aminopropyl)ethylendiamin ("N4-Amin"), Bis(3-dimethylaminopropyl)amin, Bis(2-dimethylaminoethyl)ether, N-(3-Aminopropyl)-imidazol, Monoethanolamin, 3-Amino-1-propanol, Propan-2-ol-amin ("Isopropanolamin"), 5-Amino-1-pentanol, 2-(2-Aminoethoxy)ethanol, Aminoethylethanolamin, N-(2-Hydroxyethyl)-1,3-propandiamin, N-Methylethanolamin, N-Ethylethanolamin, N-Butylethanolamin, Diethanolamin, 3-((2-Hydroxyethyl)amino)-1-propanol, Diisopropanolamin, Piperazin, N-Methylpiperazin, N-Ethylpiperazin, 1-(2-Hydroxyethyl)-piperazin oder N-(2-Aminoethyl)piperazin. Des weiteren können Formamid, N-Methylformamid, Dimethylformamid oder N-Methylacetamid verwendet werden, ebenso Harnstoff, N,N'-Dimethylharnstoff, Ethylenharnstoff, N-(2-Hydroxyethyl)-ethylenharnstoff und Sarkosin bzw Sarkosinsalze wie z.B. Sarkosin-Natriumsalz.

Besonders bevorzugt ist die Komponente c) ein Amin ausgewählt aus Hexylamin, 2-Ethylhexylamin, 2-Propylheptylamin, Decylamin, Dodecylamin, Tridecylamin oder Polyethylenimine. Letztgenannte sind kommerziell erhältlich beispielsweise unter der Bezeichnung Lupasol^{®} (BASF SE, Ludwigshafen, Deutschland) mit Molekulargewichten von 500 bis 1.000.000 g/mol.

Die Komponenten a) bis c) können in beliebigen Verhältnissen zueinander vorliegen. In einer Ausführungsform der vorliegenden Erfindung wird die Komponente c) vorzugsweise zu 0,1 bis 80 Gew.-%, insbesondere zu 0,2 bis 65 Gew.-%, eingesetzt (bezogen auf die Gesamtmenge an Komponente a) bis c)).

Die erfindungsgemäßen Polymere können nach dem Fachmann bekannten Polymerisationsverfahren hergestellt werden. Vorzugsweise erfolgt die Polymerisation als baseninitiierte Polyaddition und/oder bei der Polymerisation wird eine (weitere) Base eingesetzt. Die Polyaddition und/oder Polymerisation kann aber auch ohne Verwendung einer zusätzlichen Base durchgeführt werden. Sofern eine Base eingesetzt wird, handelt es sich dabei um eine Verbindung, die eine höhere Basizität (höheren pH-Wert) aufweist, als das Amin gemäß Komponente c). Folglich können auch Amine als Base im Sinne der vorliegenden Erfindung eingesetzt werden, sofern das entsprechende Amin über eine höhere Basizität verfügt als das Amin gemäß Komponente c). Das Polymerisationsverfahren als solches zur Herstellung der erfindungsgemäßen Polymere wird im nachfolgenden Text noch näher beschrieben.

Für Polymerisationsverfahren geeignete Basen sind dem Fachmann bekannt, beispielsweise sind hierfür Alkalimetalle, Alkalihydride, Alkalihydroxide, Alkalialkoholate oder Erdalkalimetalle, Erdalkalihydride, Erdalkalihydroxide oder Erdalkalialkoholate, sowie tertiäre und heteroaromatische Amine einsetzbar.

Als Alkalihydroxid oder als Erdalkalihydroxid können alle dem Fachmann bekannten Verbindungen eingesetzt werden. Bevorzugte Alkalihydroxide sind Natriumhydroxid, Kaliumhydroxid oder Cäsiumhydroxid, bevorzugte Erdalkalihydroxide sind Magnesiumhydroxid oder Calciumhydroxid, bevorzugte Alkalialkoholate sind Natriummethanolat, Natrium-t-butylat und Kaliummethanolat sowie Kalium-t-butylat. Bevorzugte Amine (als Base) sind Trimethylamin, N,N-Dimethylethanolamin und sonstige N,N-Dimethyl substituierte tertiäre Amine, oder Imidazol und seine Derivate.

Bevorzugte Basen sind ausgewählt aus KOH, KOCH₃, KO(t-Bu), KH, NaOH, NaO(t-Bu), NaOCH₃, NaH, Na, K, Trimethylamin, N,N-Dimethylethanolamin, N,N-Dimethylcyclohexylamin und höhere N,N-Dimethylalkylamine, N,N-Dimethylanilin, N,N-Dimethylbenzylamin, N,N,N',N'-Tetramethylethylendiamin, N,N,N',N",N"-Pentamethyldiethylentriamin, Imidazol, N-Methylimidazol, 2-Methylimidazol, 2,2-Dimethylimidazol, 4-Methylimidazol, 2,4,5-Trimethylimidazol und 2-Ethyl-4-methylimidazol. Unter höheren N,N-Dimethylalkylaminen werden alle Amine verstanden, deren Alkylsubstituent mehr als 6 Kohlenstoffatome aufweist.

Besonders bevorzugte Basen sind KO(t-Bu) (wobei t-Bu für den Rest tertiär-Butyl steht), KOH oder NaOH.

Die Base wird vorzugsweise in Mengen von 0,05 Gew.-% bis 20 Gew.-% eingesetzt, bevorzugt wird die Base in einer Menge von 0,1 bis 10 Gew.-%, insbesondere von 0,1 bis 1 Gew.-% eingesetzt (jeweils bezogen auf die Menge an Polymer (Produkt)).

In einer bevorzugten Ausführungsform der vorliegenden Erfindung wird die Base in gelöster Form eingesetzt. Als Lösungsmittel können alle dem Fachmann bekannten Lösungsmittel verwendet werden, in der sich die entsprechende Base löst. Vorzugsweise wird Wasser als Lösungsmittel für die Base, insbesondere bei Alkalihydroxiden, eingesetzt. Vorzugsweise wird die Base in Mengen von 40 bis 60 Gew.-% (bezogen auf das Lösungsmittel der Base) eingesetzt.

Bei dem erfindungsgemäßen Polymer handelt es sich vorzugsweise um ein statisches Copolymer, ein Blockcopolymer, ein Kammpolymer, ein Multiblockcopolymer oder ein Gradientencopolymer. Dies bedeutet, dass - in Abhängigkeit von den gewählten Polymerisationsbedingungen - die zur Polymerisation gebrachten Monomere (Komponenten a) bis c) gemäß den vorstehenden Definitionen) im erfindungsgemäßen Polymer auf unterschiedlicher Art und Weise einpolymerisiert werden können.

Vorzugsweise enthält das erfindungsgemäße Polymer eines oder mehrere Fragmente gemäß der nachfolgenden Formel (II) bis (VI)

(A)ₙ - (Gly)ₘ -(B)ₚ (II)

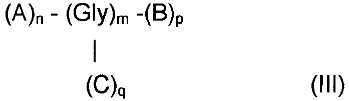

R² - (A)ₙ - (Gly)ₘ - (B)ₚ (IV)

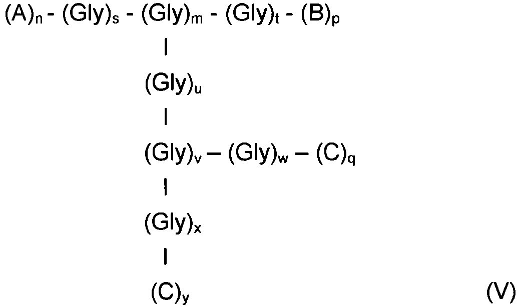

R² - (Gly)ₘ - (A)ₙ (VI)

wobei A, B und C unabhängig voneinander aus der Komponente a) gebildet werden,
Gly aus der Komponente b) gebildet wird,
R² aus einem Amin gemäß Komponente c) gebildet wird

In der Formel (II) weisen n und m unabhängig voneinander Werte zwischen 1 und 1000 und p Werte zwischen 0 und 1000 auf. Sofern B vorhanden ist, werden A und B vorzugsweise aus unterschiedlichen Monomeren der Komponente a) gebildet.

In der Formel (III) weisen n, m, p und q unabhängig voneinander Werte zwischen 1 und 1000 auf.

In der Formel (IV) weisen n, m und p unabhängig voneinander Werte zwischen 1 und 1000 auf.

In der Formel (V) weisen n, m, p, v und y unabhängig voneinander Werte zwischen 1 und 1000 auf und q, s, t, u, w und x unabhängig voneinander Werte zwischen 0 und 1000 auf.

In der Formel (VI) weisen m und n unabhängig voneinander Werte zwischen 1 und 1000 auf.

Der Vollständigkeit halber wird angemerkt, dass die erfindungsgemäßen Polymere auch mehrere der vorgenannten Fragmente der gleichen Formel enthalten können. So ist es denkbar, dass ein erfindungsgemäßes Polymer zwei Fragmente der Formel (II) sowie ein Fragment von beispielsweise der Formel (III) umfasst. In den einzelnen Fragmenten können die Variablen wie A oder B unterschiedliche Bedeutung haben. Die Fragmente der Formel (II) bis (VI) können beispielsweise als statisches Copolymer, Blockcopolymer oder sonstige Polymeranordnungen gemäß der Definition der vorliegenden Erfindung angeordnet sein. Sofern beispielsweise als Komponente a) Ethylenoxid und als Komponente b) Glycerincarbonat verwendet wird, haben in der Formel (II) die Variable A und B die gleiche Bedeutung (Polymerisationsprodukte des Ethylenoxids). Sofern beispielsweise die Polymerisation mit Ethylenoxid und Propylencarbonat als zwei unterschiedliche Komponenten a) durchgeführt wird, haben beispielsweise in Formel (II) die Variablen A und B unterschiedliche Bedeutung. Eine Variable steht dann für polymerisiertes Ethylenoxid, die andere Variable für polymerisiertes Propylencarbonat.

Konkrete Beispiele für Fragmente in den erfindungsgemäßen Polymeren sind weiterhin wie folgt:

| | |
|---|---|
| (EO)ₙ-(Gly)₃-(EO)ₙ | (Glycerin-Block) |
| (EO)_{n/2}-(Gly)₁-(EO)_{n/2}-(Gly)₁-(EO)_{n/2} | (Glycerin statisch verteilt) |

In diesen Beispielen bedeutet EO einpolymerisiertes Ethylenoxid und Gly bedeutet einpolymerisiertes Glycerincarbonat.

Bevorzugte Polymere, die ein oder mehrere Fragmente der Formel (II) enthalten, sind Polymere auf der Basis von Ethylenoxid und Propylenoxid oder von Ethylencarbonat und Propylencarbonat als Komponente a). Besonders bevorzugt sind Polymere, die ein oder mehrere Fragmente der Formel (II) enthalten, oder Polymere auf der Basis von Ethylenoxid oder Ethylencarbonat als Komponente (a). Ganz besonders bevorzugt sind Polymere auf der Basis von Ethylencarbonat als Komponente (a). Diese (Co-)Polymere können vorzugsweise als statistische Copolymere, Blockpolymere, Multiblock- oder Gradientencopolymere vorliegen.Vorzugsweise liegen alle Komponenten eines Fragmentes gemäß der Formel (II) in der gleichen Größenordnung vor, d.h. die molaren Verhältnisse von A, Gly und B betragen von ca. 1:0,5:0 über 1:1:1 bis 0:0,5:1.

Bevorzugte Polymere, die eines oder mehrere Fragmente der Formel (III) enthalten, sind Copolymere auf Basis von Ethylenoxid und/oder Propylenoxid bzw. Ethylencarbonat und/oder Propylencarbonat, besonders bevorzugt aus Ethylenoxid oder Ethylencarbonat, ganz besonders bevorzugt aus Ethylenoxid, die einen relativ geringen Anteil an aus Glycerincarbonat stammenden Einheiten aufweisen. Vorzugsweise handelt es sich dabei um Blockpolymere, Kammpolymere oder statistische Polymere. Ein erhöhter Verzweigungsgrad von Polymeren enthaltend Fragmente der Formel (III) kann über einen weiteren Alkoxylierungsschritt durchgeführt werden.

Bevorzugte Polymere, die eines oder mehrere Fragmente gemäß der Formel (IV) oder (VI) enthalten, können als blockartige oder statistische Polymere vorliegen, vorzugsweise auf Basis von Propylenoxid, Ethylenoxid, Propylencarbonat und/oder Ethylencarbonat. Besonders bevorzugt können Polymere, die eines oder mehrere Fragmente gemäß der Formel (IV) oder (VI) enthalten, als blockartige oder statistische Polymere vorliegen, vorzugsweise auf Basis von Ethylenoxid, und/oder Ethylencarbonat. Ganz besonders bevorzugt können Polymere, die eines oder mehrere Fragmente gemäß der Formel (IV) oder (VI) enthalten, als blockartige oder statistische Polymere vorliegen, vorzugsweise auf Basis von Ethylenoxid. Der vom eingesetzten Amin (Komponente c)) stammende Rest R² ist vorzugsweise ein C₁-C₅₀-Alkylrest. Der Rest R² kann darüber hinaus ein- oder mehrfach ungesättigt, aliphatisch, aromatisch, ar-aliphatisch oder verzweigt sein oder Heteroatome enthalten.

Bevorzugte Polymere, die eines oder mehrere Fragmente gemäß der Formel (V) enthalten, können als blockartige oder statistische Polymere bzw. Kamm- oder Gradientenpolymere vorliegen, vorzugsweise auf Basis von Propylenoxid, Ethylenoxid, Propylencarbonat und/oder Ethylencarbonat. Besonders bevorzugt können Polymere, die eines oder mehrere Fragmente gemäß der Formel (V) enthalten, als blockartige oder statistische Polymere bzw. Kamm- oder Gradientenpolymere vorliegen, vorzugsweise auf Basis von Ethylenoxid, und/oder Ethylencarbonat. Ganz besonders bevorzugt können Polymere, die eines oder mehrere Fragmente gemäß der Formel (V) enthalten, als blockartige oder statistische Polymere bzw. Kamm- oder Gradientenpolymere vorliegen, vorzugsweise auf Basis von Ethylenoxid.

In einer Ausführungsform der vorliegenden Erfindung ist das erfindungsgemäß hergestellte Polymer erhältlich durch Polymerisation von
a) mindestens ein Monomer ausgewählt aus Ethylenoxid, Propylenoxid, Ethylencarbonat und Propylencarbonat,
b) Glycerincarbonat und
c) mindestens einem Amin ausgewählt aus Hexylamin, 2-Ethylhexylamin, 2-Propylheptylamin, Decylamin, Dodecylamin, Tridecylamin, Polyethyleniminen.

Die Polymerisation kann in Gegenwart einer (weiteren) Base und/oder Wasser durchgeführt werden. Die Base ist vorzugsweise KO(t-Bu), KOH oder NaOH. Vorzugsweise werden geringe Mengen an Wasser eingesetzt.

Ein weiterer Gegenstand der vorliegenden Erfindung ist ein Verfahren zur Herstellung eines Polymers gemäß den vorstehenden Definitionen. Im erfindungsgemäßen Verfahren werden die Komponenten a) bis c) einer Polymerisation unterzogen. Die jeweiligen Komponenten a) bis c) können einzeln oder gemeinsam sowie vollständig oder schrittweise der Polymerisation unterzogen werden.

Das erfindungsgemäße Verfahren wird bei dem Fachmann bekannten Temperaturbereichen für Polymerisationsverfahren durchgeführt, vorzugsweise bei erhöhter Temperatur, beispielsweise bei 80 bis 220 °C.

Das erfindungsgemäße Verfahren wird bei Umsetzung von cyclischen Carbonaten (als Komponente a)) vorzugsweise bei erhöhter Temperatur durchgeführt, mehr bevorzugt bei 150° bis 220°C, besonders bevorzugt bei 160 bis 210°C.

Das erfindungsgemäße Verfahren wird bei Umsetzung von Alkylenoxiden (als Komponente a)) vorzugsweise bei erhöhter Temperatur durchgeführt, mehr bevorzugt bei 80° bis 220°C, besonders bevorzugt bei 120°C bis 205°C.

Das erfindungsgemäße Verfahren kann auch in Gegenwart eines Lösungsmittels durchgeführt werden. Als Lösungsmittel können alle dem Fachmann bekannten Lösungsmittel zur Durchführung von Polymerisationsverfahren eingesetzt werden. Bevorzugte Lösungsmittel sind Toluol, Xylol, Tetrahydrofuran (THF) oder Dioxan. Vorzugsweise wird das Lösungsmittel in Mengen von 20 bis 90 Gew.-%, insbesondere von 30 bis 70 Gew.-% bezogen auf die Gesamtmenge an Komponenten a) bis c) eingesetzt.

Vorzugsweise wird im erfindungsgemäßen Verfahren die Polymerisation als baseninitiierte Polyaddition und/oder unter CO₂-Freisetzung durchgeführt.

Das erfindungsgemäße Verfahren kann auch in Gegenwart von Wasser durchgeführt werden, beispielsweise in bis zu 85 Gew.-% an Wasser, bezogen auf die Menge an eingesetztem Amin (Komponente c)). Vorzugsweise wird das erfindungsgemäße Verfahren wasserfrei oder in Gegenwart von geringen Mengen an Wasser durchgeführt, sofern im erfindungsgemäßen Verfahren eine Base eingesetzt wird. Unter geringen Mengen an Wasser werden Wasseranteile von bis zu 5 Gew.-%, bezogen auf die Mengen an eingesetzten Aminen (Komponente c)), verstanden. Sofern im erfindungsgemäßen Verfahren keine Base eingesetzt wird, ist es vorteilhaft, wenn die Polymerisation in Gegenwart von Wasser durchgeführt wird, beispielsweise in Mengen von 0,1 bis 60 Gew.-% an Wasser, bezogen auf die Menge an eingesetztem Amin (Komponente c)). Sofern im erfindungsgemäßen Verfahren Wasser entfernt wird, erfolgt dies beispielsweise durch Destillation, vorzugsweise vor der Polymerisation. Das zu entfernende Wasser ist vorzugsweise Wasser, das als Lösungsmittel für die Base verwendet wird oder Wasser, das beim Deprotonieren des Amins durch die Base freigesetzt wird.

Weiterhin ist es bevorzugt, das erfindungsgemäße Verfahren so durchzuführen, dass es die folgenden Schritte umfasst
a) Vorlegen des Amins (Komponente c) mit einer Base, gegebenenfalls in Anwesenheit geringer Mengen von Wasser,
b) Zudosieren der übrigen Monomeren (Komponenten a) und b))
c) Rühren des Reaktionsgemisches unter Inertgas bis zur Druckkonstanz und
d) gegebenenfalls Neutralisierung des Produktes nach Beendigung der Polymerisation durch Behandlung mit einem sauren Ionenaustauscher oder einer Säure, vorzugsweise Phosphorsäure.

Weiterhin ist es möglich, einzelne oder mehrere Monomere in mehreren Teilmengen zuzugeben. Bei der Neutralisierung gemäß Schritt d) wird vorzugsweise Ambosol als saurer Ionenaustauscher eingesetzt.

Weiterhin ist es möglich, dass das Amin (Komponente c)) zuerst mit der Komponente a), insbesondere mit Ethylenoxid, und anschließend mit Glycerincarbonat (Komponente b)) polymerisiert wird. Ebenso ist es möglich, dass das Amin (Komponente c)) zuerst mit Glycerincarbonat (Komponente b)) und anschließend mit der Komponente a), insbesondere mit Ethylenoxid, polymerisiert wird.

Ein weiterer Gegenstand der vorliegenden Erfindung ist die Verwendung der vorstehend definierten erfindungsgemäßen Polymere als Schaumdämpfer; als Schaumregulierer; als Schaumverstärker; als Dispersionsmittel; als Emulgator, insbesondere in der Emulsionspolymerisation; als Netzmittel, insbesondere für harte Oberflächen; als Schmiermittel; zur Dispersion von Feststoffen, insbesondere für Zement zur Betonverflüssigung; zur Verdickung wässriger Lösungen; als Träger- oder Füllmaterial für pharmazeutische Zubereitungen; als Tensid für Wasch- oder Reinigungszwecke; als Tensid zur Reinigung harter Oberflächen; als Feuchthaltemittel; in kosmetischen, pharmazeutischen oder Pflanzenschutzformulierungen; als Adjuvants oder Solubilisator für Wirkstoffe; in Lacken; in Farben; in Pigmentpräparationen; in Beschichtungsmitteln; in Klebstoffen; in Lederentfettungsmitteln; in Formulierungen für die Textilindustrie, die Faserbearbeitung, die Wasserbehandlung oder die Trinkwassergewinnung; in der Lebensmittelindustrie; der Papierindustrie; als Bauhilfsmittel; als Kühl- und Schmiermittel; zur Fermentation; in der Mineralverarbeitung oder Metallverarbeitung, wie Metallveredlung oder Galvanobereich. Die Tenside können erfindungsgemäß nicht-ionisch oder ionisch sein.

Nachfolgend wird die vorliegende Erfindung anhand der Beispiele verdeutlicht.

### Beispiel 1:

78,5 g 2-Propylheptylamin werden mit 2,05 g Kalium-tert-Butylat in einem Reaktor vorgelegt. Anschließend wird die Reaktionslösung unter Stickstoff auf 170 °C erhitzt und 66 g Ethylencarbonat und 60,3 g Glycerincarbonat innerhalb von 60 Minuten zudosiert. Nach Dosierende wird der Ansatz 15 Stunden bei 170 °C gerührt. Danach wird die Reaktionslösung mit Stickstoff gespült und bei 80 °C und Wasserstrahlvakuum 2 h entgast.

Man erhält eine klare, viskose Flüssigkeit, die im IR keine Signale zeigt, die auf das Vorhandensein von Carbonylgruppen schließen lassen. Das Gewichtsmittel des Molekulargewichts des erhaltenen Polymeren beträgt 470 g/mol (GPC, Polystyrol-Standard).

### Beispiel 2:

78,5 g 2-Propylheptylamin werden mit 2,05 g Kalium-tert-Butylat in einem Reaktor vorgelegt. Anschließend wird die Reaktionslösung unter Stickstoff auf 100 °C erhitzt und 66 g Ethylencarbonat und 60,3 g Glycerincarbonat innerhalb von 60 Minuten zudosiert. Nach Dosierende wird der Ansatz 15 Stunden bei 100 °C gerührt. Danach wird die Reaktionslösung mit Stickstoff gespült und bei 80 °C und Wasserstrahlvakuum 2 h entgast.

Man erhält eine klare, viskose Flüssigkeit, die im Infrarot (IR) keine Signale zeigt, die auf das Vorhandensein von Carbonylgruppen schließen lassen. Das Gewichtsmittel des Molekulargewichts des erhaltenen Polymeren beträgt 360 g/mol (GPC, Polystyrol-Standard).

## Patentansprüche

1. Polymer hergestellt durch Polymerisation von
a) mindestens einem Alkylenoxid oder einem cyclischen Carbonat der Formel (I) 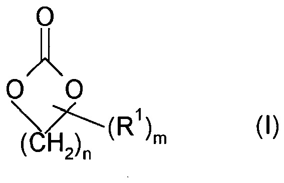 wobei
n gleich 1 bis 10 ist,
m gleich 0 bis 3 ist und
R¹gleich C₁-C₁₀-Alkyl, C₂-C₁₀-Alkenyl, Aryl oder Aralkyl ist,
b) Glycerincarbonat und
c) mindestens einem Amin.

2. Polymer gemäß Anspruch 1, **dadurch gekennzeichnet, dass** die Komponente a) als Alkylenoxid ein Monomer umfasst ausgewählt aus Ethylenoxid, Propylenoxid, 1-Butenoxid, 2-Butenoxid, 1-Pentenoxid, Styroloxid, Epichlorhydrin, Glycidol, Epoxypropionsäure und deren Salze, Epoxypropionsäurealkylester, 1-Hexenoxid, 1-Heptenoxid, 1-Octenoxid, 1-Nonenoxid, 1-Decenoxid, 1-Undecenoxid oder 1-Dodecenoxid und/oder das cyclische Carbonat der Formel (I) ausgewählt ist aus Ethylencarbonat oder Propylencarbonat.

3. Polymer gemäß Anspruch 1 oder 2, **dadurch gekennzeichnet, dass** die Komponente c) ein Amin ist ausgewählt aus Hexylamin, 2-Ethylhexylamin, 2-Propylheptylamin, Decylamin, Dodecylamin, Tridecylamin oder Polyethyleniminen.

4. Polymer gemäß einem der Ansprüche 1 bis 3, **dadurch gekennzeichnet, dass** die Komponente a) mindestens ein Alkylenoxid ist, vorzugsweise Ethylenoxid und/oder Propylenoxid.

5. Polymer gemäß einem der Ansprüche 1 bis 4, **dadurch gekennzeichnet, dass** die Polymerisation als baseninitiierte Polyaddition durchgeführt wird und/oder bei der Polymerisation eine Base eingesetzt wird ausgewählt aus KOH, KOCH₃, KO(t-Bu), KH, NaOH, NaO(t-Bu), NaOCH₃, NaH, Na, K, Trimethylamin, N,N-Dimethylethanolamin, N,N-Dimethylcyclohexylamin und höhere N,N-Dimethylalkylamine, N,N-Dimethylanilin, N,N-Dimethylbenzylamin, N,N,N',N'-Tetramethylethylendiamin, N,N,N',N",N"-Pentamethyldiethylentriamin, Imidazol, N-Methylimidazol, 2-Methylimidazol, 2,2-Dimethylimidazol, 4-Methylimidazol, 2,4,5-Trimethylimidazol und 2-Ethyl-4-methylimidazol.

6. Polymer gemäß Anspruch 5, **dadurch gekennzeichnet, dass** die Base in Mengen von 0,05 bis 20 Gew.-% (bezogen auf die Menge an Polymer) eingesetzt wird.

7. Polymer gemäß einem der Ansprüche 1 bis 6, **dadurch gekennzeichnet, dass** das Polymer ein statisches Copolymer, ein Blockcopolymer, ein Kammpolymer, ein Multiblockcopolymer oder ein Gradientencopolymer ist.

8. Polymer gemäß einem der Ansprüche 1 bis 7, **dadurch gekennzeichnet, dass** das Polymer eines oder mehrere Fragmente gemäß der Formeln (II) bis (VI) umfasst,
(A)ₙ - (Gly)ₘ -(B)ₚ (II) 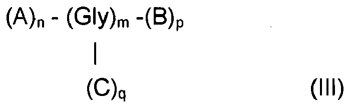
R² - (A)ₙ - (Gly)ₘ - (B)ₚ (IV) 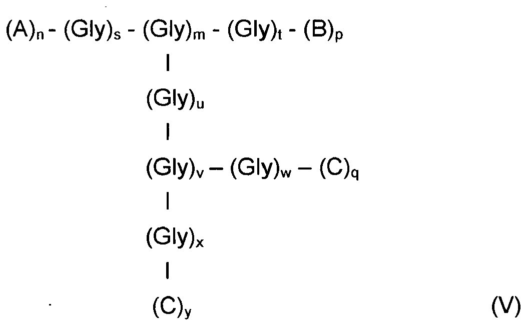
R² - (Gly)ₘ - (A)n (VI)
wobei A, B und C unabhängig voneinander aus der Komponente a) gebildet werden,
Gly aus der Komponente b) gebildet wird,
R² aus einem Amin gemäß Komponente c) gebildet wird,
wobei in der Formel (II) n und m unabhängig voneinander Werte zwischen 1 und 1000 und p Werte zwischen 0 und 1000 aufweisen,
wobei in der Formel (III) n, m, p und q unabhängig voneinander Werte zwischen 1 und 1000 aufweisen,
wobei in der Formel (IV) n, m und p unabhängig voneinander Werte zwischen 1 und 1000 aufweisen,
wobei in der Formel (V) n, m, p, v und y unabhängig voneinander Werte zwischen 1 und 1000 und q, s, t, u, w und x unabhängig voneinander Werte zwischen 0 und 1000 aufweisen,
wobei in der Formel (VI) m und n unabhängig voneinander Werte zwischen 1 und 1000 aufweisen.

9. Verfahren zur Herstellung eines Polymers gemäß einem der Ansprüche 1 bis 8, **dadurch gekennzeichnet, dass** die Komponenten a) bis c) einer Polymerisation unterzogen werden.

10. Verfahren gemäß Anspruch 9, **dadurch gekennzeichnet, dass** die Polymerisation als baseninitiierte Polyaddition und/oder unter CO₂-Freisetzung durchgeführt wird.

11. Verfahren gemäß Anspruch 9 oder 10 umfassend die nachfolgenden Schritte
a) Vorlegen des Amins (Komponente c) mit einer Base, gegebenenfalls in Anwesenheit geringer Mengen von Wasser,
b) Zudosieren der übrigen Monomeren (Komponenten a) und b)),
c) Rühren des Reaktionsgemisches unter Inertgas bis zur Druckkonstanz und
d) gegebenenfalls Neutralisierung des Produktes nach Beendigung der Polymerisation durch Behandlung mit einem sauren Ionenaustauscher oder einer Säure, vorzugsweise Phosphorsäure.

12. Verfahren gemäß einem der Ansprüche 9 bis 11, **dadurch gekennzeichnet, dass** die Polymerisation in Gegenwart von Wasser, vorzugsweise mit geringen Mengen an Wasser, durchgeführt wird.

13. Verwendung der Polymere gemäß einem der Ansprüche 1 bis 8 als Schaumdämpfer; als Schaumregulierer; als Schaumverstärker; als Dispersionsmittel; als Emulgator, insbesondere in der Emulsionspolymerisation; als Netzmittel, insbesondere für harte Oberflächen; als Schmiermittel; zur Dispersion von Feststoffen, insbesondere für Zement zur Betonverflüssigung; zur Verdickung wässriger Lösungen; als Träger- oder Füllmaterial für pharmazeutische Zubereitungen; als Tensid für Wasch- oder Reinigungszwecke; als Tensid zur Reinigung harter Oberflächen; als Feuchthaltemittel; in kosmetischen, pharmazeutischen oder Pflanzenschutzformulierungen; als Adjuvants oder Solubilisator für Wirkstoffe; in Lacken; in Farben; in Pigmentpräparationen; in Beschichtungsmitteln; in Klebstoffen; in Lederentfettungsmitteln; in Formulierungen für die Textilindustrie, die Faserbearbeitung, die Wasserbehandlung oder die Trinkwassergewinnung; in der Lebensmittelindustrie; der Papierindustrie; als Bauhilfsmittel; als Kühl- und Schmiermittel; zur Fermentation; in der Mineralverarbeitung oder Metallverarbeitung, wie Metallveredlung oder Galvanobereich.

## Claims

1. A polymer prepared by polymerization of
a) at least one alkylene oxide or a cyclic carbonate of the formula (I) 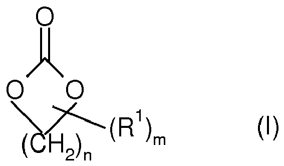 where
n is 1 to 10,
m is 0 to 3 and
R¹ is C₁-C₁₀-alkyl, C₂-C₁₀-alkenyl, aryl or aralkyl,
b) glycerol carbonate and
c) at least one amine.

2. The polymer according to claim 1, wherein the component a) comprises as alkylene oxide a monomer selected from ethylene oxide, propylene oxide, 1-butene oxide, 2-butene oxide, 1-pentene oxide, styrene oxide, epichlorohydrin, glycidol, epoxypropionic acid and salts thereof, epoxypropionic acid alkyl esters, 1-hexene oxide, 1-heptene oxide, 1-octene oxide, 1-nonene oxide, 1-decene oxide, 1-undecene oxide or 1-dodecene oxide and/or the cyclic carbonate of the formula (I) is selected from ethylene carbonate or propylene carbonate.

3. The polymer according to claim 1 or 2, wherein the component c) is an amine selected from hexylamine, 2-ethylhexylamine, 2-propylheptylamine, decylamine, dodecylamine, tridecylamine or polyethyleneimines.

4. The polymer according to any one of claims 1 to 3, wherein the component a) is at least one alkylene oxide, preferably ethylene oxide and/or propylene oxide.

5. The polymer according to any one of claims 1 to 4, wherein the polymerization is carried out as base-initiated polyaddition and/or a base selected from KOH, KOCH₃, KO(t-Bu), KH, NaOH, NaO(t-Bu), NaOCH₃, NaH, Na, K, trimethylamine, N,N-dimethylethanolamine, N,N-dimethylcyclohexylamine and higher N,N-dimethylalkylamines, N,N-dimethylaniline, N,N-dimethylbenzylamine, N,N,N'N'-tetramethylethylenediamine, N,N,N',N'',N''-pentamethyldiethylenetriamine, imidazole, N-methylimidazole, 2-methylimidazole, 2,2-dimethylimidazole, 4-methylimidazole, 2,4,5-trimethylimidazole and 2-ethyl-4-methylimidazole is used during the polymerization.

6. The polymer according to claim 5, wherein the base is used in amounts of from 0.05 to 20% by weight (based on the amount of polymer).

7. The polymer according to any one of claims 1 to 6, wherein the polymer is a random copolymer, a block copolymer, a comb polymer, a multiblock copolymer or a gradient copolymer.

8. The polymer according to any one of claims 1 to 7, wherein the polymer comprises one or more fragments according to the formulae (II) to (VI)
(A)ₙ - (Gly)ₘ - (B)ₚ (II) 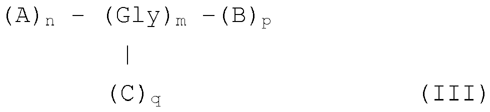
R² - (A)ₙ - (Gly)ₘ - (B)ₚ (IV) 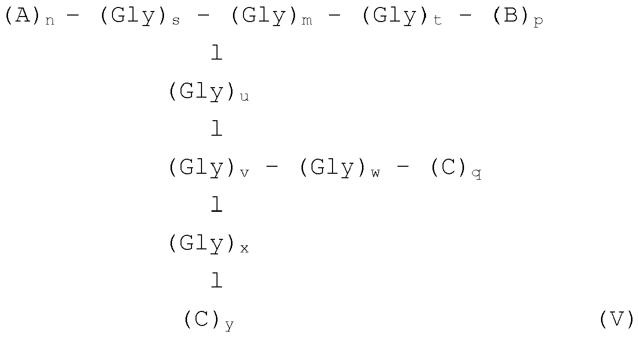
R² - (Gly)ₘ - (A)ₙ (VI)
where A, B and C, independently of one another, are formed from the component a),
Gly is formed from the component b),
R² is formed from an amine according to component c),
where, in the formula (II), n and m, independently of one another, have values between 1 and 1000 and p has values between 0 and 1000,
where, in the formula (III), n, m, p and q, independently of one another, have values between 1 and 1000,
where, in the formula (IV), n, m and p, independently of one another, have values between 1 and 1000,
where, in the formula (V), n, m, p, v and y, independently of one another, have values between 1 and 1000 and q, s, t, u, w and x, independently of one another, have values between 0 and 1000,
where, in the formula (VI), m and n, independently of one another, have values between 1 and 1000.

9. A process for the preparation of a polymer according to any one of claims 1 to 8, wherein the components a) to c) are subjected to a polymerization.

10. The process according to claim 9, wherein the polymerization is carried out as a base-initiated polyaddition and/or with the release of CO₂.

11. The process according to claim 9 or 10, comprising the following steps
a) introduction of the amine (component c)) as initial charge with a base, optionally in the presence of small amounts of water,
b) metered addition of the other monomers (components a) and b)),
c) stirring of the reaction mixture under inert gas to constant pressure and
d) optionally neutralization of the product when the polymerization is complete by treatment with an acidic ion exchanger or an acid, preferably phosphoric acid.

12. The process according to any one of claims 9 to 11, wherein the polymerization is carried out in the presence of water, preferably with small amounts of water.

13. The use of the polymers according to any one of claims 1 to 8 as foam suppressant; as foam regulator; as foam booster; as dispersant; as emulsifier, in particular in emulsion polymerization; as wetting agent, in particular for hard surfaces; as lubricant; for dispersing solids, in particular for cement for thinning concrete; for thickening aqueous solutions; as carrier or filling material for pharmaceutical preparations; as surfactant for washing or cleaning purposes; as surfactant for the cleaning of hard surfaces; as humectant; in cosmetic, pharmaceutical or crop protection formulations; as adjuvant or solubilizer for active ingredients; in paints; in inks; in pigment preparations; in coating compositions; in adhesives; in leather degreasing compositions; in formulations for the textile industry, fiber processing, water treatment or the production of drinking water; in the food industry; the paper industry; as construction auxiliaries; as coolant and lubricant; for fermentation; in mineral processing or metal processing, such as metal refining or electroplating sector.

## Revendications

1. Polymère fabriqué par polymérisation de
a) au moins un oxyde d'alkylène ou un carbonate cyclique de formule (I) 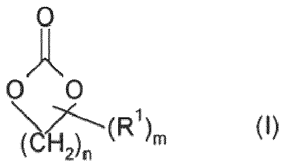 dans laquelle
n représente 1 à 10,
m représente 0 à 3 et
R¹ représente alkyle en C₁-C₁₀, alcényle en C₂-C₁₀, aryle ou aralkyle,
b) du carbonate de glycérine et
c) au moins une amine.

2. Polymère selon la revendication 1, **caractérisé en ce que** le composant a) comprend en tant qu'oxyde d'alkylène un monomère choisi parmi l'oxyde d'éthylène, l'oxyde de propylène, l'oxyde de 1-butène, l'oxyde de 2-butène, l'oxyde de 1-pentène, l'oxyde de styrène, l'épichlorhydrine, le glycidol, l'acide époxypropionique et ses sels, les esters alkyliques de l'acide époxypropionique, l'oxyde de 1-hexène, l'oxyde de 1-heptène, l'oxyde de 1-octène, l'oxyde de 1-nonène, l'oxyde de 1-décène, l'oxyde de 1-undécène ou l'oxyde de 1-dodécène et/ou le carbonate cyclique de formule (I) est choisi parmi le carbonate d'éthylène ou le carbonate de propylène.

3. Polymère selon la revendication 1 ou 2, **caractérisé en ce que** le composant c) est une amine choisie parmi l'hexylamine, la 2-éthylhexylamine, la 2-propylheptylamine, la décylamine, la dodécylamine, la tridécylamine ou les polyéthylène-imines.

4. Polymère selon l'une quelconque des revendications 1 à 3, **caractérisé en ce que** le composant a) est au moins un oxyde d'alkylène, de préférence l'oxyde d'éthylène et/ou l'oxyde de propylène.

5. Polymère selon l'une quelconque des revendications 1 à 4, **caractérisé en ce que** la polymérisation est réalisée sous la forme d'une polyaddition initiée par une base et/ou une base est utilisée lors de la polymérisation, choisie parmi KOH, KOCH₃, KO(t-Bu), KH, NaOH, NaO(t-Bu), NaOCH₃, NaH, Na, K, la triméthylamine, la N,N-diméthyléthanolamine, la N,N-diméthylcyclohexylamine et les N,N-diméthylalkylamines supérieures, la N,N-diméthylaniline, la N,N-diméthylbenzylamine, la N,N,N',N'-tétraméthyléthylène-diamine, la N,N,N',N'',N''-pentaméthyldiéthylènetriamine, l'imidazole, le N-méthylimidazole, le 2-méthylimidazole, le 2,2-diméthylimidazole, le 4-méthylimidazole, le 2,4,5-triméthylimidazole et le 2-éthyl-4-méthylimidazole.

6. Polymère selon la revendication 5, **caractérisé en ce que** la base est utilisée en quantités de 0,05 à 20 % en poids (par rapport à la quantité de polymère).

7. Polymère selon l'une quelconque des revendications 1 à 6, **caractérisé en ce que** le polymère est un copolymère statistique, un copolymère séquencé, un polymère en peigne, un copolymère multiséquencé ou un copolymère à gradient.

8. Polymère selon l'une quelconque des revendications 1 à 7, **caractérisé en ce que** le polymère comprend un ou plusieurs fragments selon les formules (II) à (VI)
(A)ₙ - (Gly)ₘ -(B)ₚ (II) 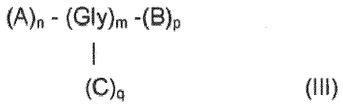
R² - (A)ₙ - (Gly)ₘ - (B)ₚ (IV) 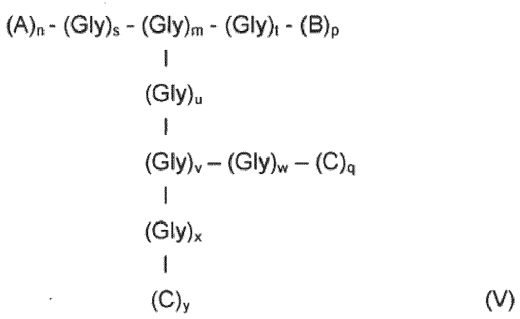
R² - (Gly)ₘ - (A)ₙ (VI)
A, B et C étant formés indépendamment les uns des autres à partir du composant a),
Gly étant formé à partir du composant b),
R² étant formé à partir d'une amine selon le composant c),
dans la formule (II), n et m présentant indépendamment l'un de l'autre des valeurs comprises entre 1 et 1 000, et p des valeurs comprises entre 0 et 1 000,
dans la formule (III), n, m, p et q présentant indépendamment les uns des autres des valeurs comprises entre 1 et 1 000,
dans la formule (IV), n, m et p présentant indépendamment les uns des autres des valeurs comprises entre 1 et 1 000,
dans la formule (V), n, m, p, v et y présentant indépendamment les uns des autres des valeurs comprises entre 1 et 1 000, et q, s, t, u, w et x présentant indépendamment les uns des autres des valeurs comprises entre 0 et 1 000,
dans la formule (VI), m et n présentant indépendamment l'un de l'autre des valeurs comprises entre 1 et 1 000.

9. Procédé de fabrication d'un polymère selon l'une quelconque des revendications 1 à 8, **caractérisé en ce que** les composants a) à c) sont soumis à une polymérisation.

10. Procédé selon la revendication 9, **caractérisé en ce que** la polymérisation est réalisée sous la forme d'une polyaddition initiée par une base et/ou avec libération de CO₂.

11. Procédé selon la revendication 9 ou 10, comprenant les étapes suivantes :
a) le chargement de l'amine (composant c) avec une base, éventuellement en présence de petites quantités d'eau,
b) l'ajout des composants restants (composants a) et b)),
c) l'agitation du mélange réactionnel sous un gaz inerte jusqu'à pression constante, et
d) éventuellement la neutralisation du produit après la fin de la polymérisation par traitement avec un échangeur d'ions acide ou un acide, de préférence l'acide phosphorique.

12. Procédé selon l'une quelconque des revendications 9 à 11, **caractérisé en ce que** la polymérisation est réalisée en présence d'eau, de préférence avec de petites quantités d'eau.

13. Utilisation des polymères selon l'une quelconque des revendications 1 à 8 en tant que suppresseurs de mousse ; en tant que régulateurs de mousse ; en tant que renforceurs de mousse ; en tant qu'agents de dispersion ; en tant qu'émulsifiants, notamment pour la polymérisation en émulsion ; en tant qu'agents mouillants, notamment pour surfaces dures ; en tant que lubrifiants ; pour la dispersion de solides, notamment pour le ciment pour la liquéfaction du béton ; pour l'épaississement de solutions aqueuses ; en tant que matériaux supports ou charges pour préparations pharmaceutiques ; en tant que tensioactifs pour des applications de lavage ou de nettoyage ; en tant que tensioactifs pour le nettoyage de surfaces dures ; en tant qu'agents de rétention de l'humidité ; dans des formulations cosmétiques, pharmaceutiques ou phytosanitaires ; en tant qu'adjuvants ou solubilisateurs pour substances actives ; dans des vernis ; dans des peintures ; dans des préparations de pigments ; dans des agents de revêtement ; dans des adhésifs ; dans des agents dégraissants pour le cuir ; dans des formulations pour l'industrie textile, le traitement de fibres, le traitement de l'eau ou l'obtention d'eau potable ; dans l'industrie alimentaire ; l'industrie du papier ; en tant qu'adjuvants de construction ; en tant que réfrigérants et lubrifiants ; pour la fermentation ; dans l'usinage de minéraux ou l'usinage de métaux, tel que l'affinage de métaux ou le domaine de la galvanisation.
